# EUROPÄISCHE PATENTSCHRIFT

(11) **EP 3 718 105 B1**
(45) Veröffentlichungstag und Bekanntmachung des Hinweises auf die Patenterteilung: **14.06.2023**
(21) Anmeldenummer: 18807585.7
(22) Anmeldetag: 18.11.2018
(51) Int. Cl.: G10L 15/30, G10L 15/22, G06F 16/332

(54) **DIALOGSYSTEM UND VERFAHREN ZUR UMSETZUNG VON ANWEISUNGEN EINES NUTZERS**
DIALOG SYSTEM AND METHOD FOR IMPLEMENTING INSTRUCTIONS OF A USER
SYSTÈME DE DIALOGUE ET PROCÉDÉ DE MISE EN APPLICATION D'INSTRUCTIONS D'UN UTILISATEUR

(30) Priorität: 02.12.2017 DE 102017128651
(43) Veröffentlichungstag der Anmeldung: 07.10.2020
(73) Patentinhaber: Rückert, Tobias, 73650 Winterbach (DE)
(72) Erfinder: Rückert, Tobias, 73650 Winterbach (DE)
(74) Vertreter: Heidinger, Andreas
(86) Internationale Anmeldenummer: PCT/EP2018/081663
(87) Internationale Veröffentlichungsnummer: WO 2019/105773

(56) Entgegenhaltungen:
- WO-A1-2017/028678
- DE-U1-202016 008 226
- US-A1- 2008 120 094
- US-A1- 2009 030 697
- US-A1- 2009 204 409
- US-A1- 2012 215 539
- US-A1- 2013 346 078
- US-A1- 2016 260 434
- US-A1- 2017 132 207
- US-A1- 2017 236 519
- US-B1- 8 346 563
- US-B1- 9 761 227

## Beschreibung

Die Erfindung betrifft eine Kombination aus einem Master-Dialogsystem und wenigstens einem Slave-Dialogsystem zur Umsetzung von Anweisungen eines Nutzers mit den Merkmalen des Oberbegriffs des Anspruchs 1 und ein Verfahren zur Umsetzung von Anweisungen eines Nutzers mit den Merkmalen des Oberbegriffs des Anspruchs 7.

In der WO 2002/73331 A2 wird ein Dialogsystem zur Umsetzung von Anweisungen eines Nutzers beschrieben. Das Dialogsystem verfügt über ein Eingangsmodul, über welches der Nutzer Anweisungen in natürlicher Sprache eingeben kann. Der Nutzer kann dabei die Anweisungen entweder in Textform oder in gesprochener Form eingeben. Die Anweisungen werden von einem "Natural Language Manager" in ACSII-Zeichen umgewandelt und an einen "Knowledge Manager" weitergegeben. Der "Knowledge Manager" generiert durch entsprechende Anfragen an Datenbanken oder Suchen in Dokumenten Rückmeldungen zu den Anweisungen des Nutzers. Diese Rückmeldungen werden an den Nutzer ausgegeben. Der "Knowledge Manager" kann dabei nur auf die direkt an ihn angebundenen Datenbanken oder Dokumente zugreifen, wodurch die Arten der Anweisungen des Nutzers beschränkt sind.

Die US 2009/0204409, US 2013/0346078, US 2008/0120094, US 2012/0215539, US 2016/0260434, US 2017/0236519, US 2017/0132207 und US 9761227 beschreiben ebenfalls derartige Kombinationen aus einem Master-Dialogsystem und einem Slave-Dialogsystem.

Es ist damit insbesondere die Aufgabe der Erfindung, eine Kombination aus einem Master-Dialogsystem und wenigstens einem Slave-Dialogsystem und ein Verfahren zur Umsetzung von Anweisungen eines Nutzers vorzuschlagen, welche eine große Anzahl von Anweisungsarten ermöglichen und einfach zu nutzen sind. Die genannte Aufgabe wird durch eine Kombination aus einem Master-Dialogsystem und wenigstens einem Slave-Dialogsystem mit den Merkmalen des Anspruchs 1 und ein Verfahren mit den Merkmalen des Anspruchs 7 gelöst.

Das Master-Dialogsystem zur Umsetzung von Anweisungen eines Nutzers verfügt über ein Eingangsmodul, über welches der Nutzer Anweisungen in natürlicher Sprache eingeben kann, ein Interpretationsmodul, welches die Anweisungen des Nutzers interpretiert und Rückmeldungen zu den Anweisungen generiert und ein Ausgangsmodul, über welches die genannten Rückmeldungen an den Nutzer ausgegeben werden können. Das Master-Dialogsystem weist außerdem ein mit dem Interpretationsmodul gekoppeltes Kommunikationsmodul auf, welches mit wenigstens einem anderen Dialogsystem zur Umsetzung der Anweisungen des Nutzers kommuniziert.

Die Slave-Dialogsysteme sind dabei insbesondere so ausgeführt, dass Nutzer auch direkt, also ohne Zwischenschaltung des Master-Dialogsystems, Anweisungen an die Slave-Dialogsysteme eingeben können. Die genannten Dialogsysteme werden auch als so genannte Chatbots bezeichnet.

Das Kommunikationsmodul des Master-Dialogsystems erlaubt es dem Interpretationsmodul für die Generierung der Rückmeldung an den Nutzer auf ein oder insbesondere mehrere Slave-Dialogsysteme zurückzugreifen. Es ist damit nicht nur auf die ihm direkt zugeordneten Informationen oder Datenbanken angewiesen, sondern kann zusätzlich die Informationen und Datenbanken des einen oder der mehreren Slave-Dialogsysteme nutzen. Damit ist es möglich, unterschiedlichste Anweisungen des Nutzers umzusetzen und insbesondere eine hohe Qualität der Umsetzung zu erreichen. Beispielsweise kann das Master-Dialogsystem bei der Anweisung, die günstigste Reisemöglichkeit zwischen zwei Städten zu buchen, mit Dialogsystemen mehrerer Fluggesellschaften und Bahnanbietern kommunizieren, so den günstigsten Preis ermitteln und die Reise direkt buchen. Das Master-Dialogsystem kann damit eine sehr hohe Anzahl von verschiedenen Anweisungen eines Nutzers umsetzen. Das Master-Dialogsystem kann damit insbesondere auch auf Informationsquellen zugreifen, die keine Schnittstelle zur Anwendungsprogrammierung, häufig nur kurz API genannt (englisch "application programming interface"), zur Verfügung stellen.

Der Nutzer kann insbesondere ein menschlicher Nutzer sein. Es ist aber auch möglich, dass der Nutzer ein anderes Dialogsystem ist, das zur Umsetzung von an das Dialogsystem gestellten Anweisungen mit einem oder mehreren anderen Dialogsystemen kommunizieren kann.

Ein menschlicher Nutzer gibt seine Anweisungen insbesondere über ein Endgerät, beispielsweise einen PC, einen Tablet-Computer oder ein Smartphone ein, welches die Anweisungen insbesondere über das Internet an das Eingangsmodul des Dialogsystems sendet. Der Begriff "Anweisung" soll hier sehr allgemein verstanden werden. Eine Anweisung kann beispielsweise sein, ein Ticket für eine Zugverbindung zu einer angegebenen Uhrzeit zu buchen. Unter einer Anweisung wird auch eine Frage des Nutzers an das Dialogsystem verstanden, beispielsweise eine Frage nach dem aktuellen Wetter in einer bestimmten Stadt oder die Preise verschiedener Fluggesellschaften für einen Flug zwischen zwei Städten in einem bestimmen Zeitraum.

Der Nutzer gibt die Anweisungen in natürlicher Sprache ein. Darunter ist zu verstehen, dass er die Anweisungen in seinen eigenen Worten eingibt und sie nicht in einer vorgegebenen Syntax eingegeben werden müssen, also insbesondere nicht nur aus festgelegten Befehlen bestehen müssen. Der Nutzer kann die Anweisungen dabei schriftlich oder mündlich eingeben.

Das Interpretationsmodul des Master-Dialogsystems interpretiert bzw. analysiert die eingegebene Anweisung und generiert eine Rückmeldung zu der Anweisung an den Nutzer. Die Interpretation erfolgt insbesondere auf Grund von im Interpretationsmodul abgelegten Erkennungsmustern, die einzeln oder miteinander verschachtelt angewandt werden können. Vor der eigentlichen Analyse der Anweisung kann eine Vorverarbeitung der Anweisung erfolgen, in der beispielsweise eine gesprochene Anweisung in eine schriftliche Anweisung konvertiert wird, die Schreibweise harmonisiert, also beispielsweise Satzzeichen entfernt, Groß- und Kleinschreibung oder Umlaute in ein vorgegebenes Format gebracht werden, oder Tippfehler ausgeglichen werden. Diese Vorverarbeitung kann bereits im Eingangsmodul, erst im Interpretationsmodul oder in einem zusätzlichen Vorverarbeitungsmodul erfolgen. Es ist auch möglich, dass vor der Analyse der Anweisung eine weitere Vorverarbeitung durchgeführt wird, bei der die Anweisung des Nutzers in andere Sprachen übersetzt wird. Das Interpretationsmodul kann dann sowohl die Originalanweisung, als auch die übersetzten Anweisungen analysieren. Aus der Ergebnissen der einzelnen Analysen kann dann die Rückmeldung an den Nutzer generiert werden. Darüber hinaus kann das Dialogsystem weitere Module oder Komponenten aufweisen, die spezielle, hier nicht weiter ausgeführte Aufgaben erledigen.

Sobald das Interpretationsmodul des Master-Dialogsystems die Anweisung interpretiert, also "verstanden" hat, generiert es eine Rückmeldung an den Nutzer. Bei einer sehr einfachen Anweisung, beispielsweise der Frage, ob das Dialogsystem gerade aktiv ist, kann das Interpretationsmodul die Anfrage direkt und ohne Zugriff auf andere Komponenten beantworten. Es ist auch möglich, dass das Interpretationsmodul für solch einfache Anweisungen mit einer Datenbank in Kommunikationsverbindung steht, die auch Teil des Dialogsystems sein kann. In dieser Datenbank können die Rückmeldungen auf einfache Anweisungen gespeichert sein.

Für die Generierung der Rückmeldungen auf Anfragen des Nutzers, die das Interpretationsmodul des Master-Dialogsystems nicht direkt generieren kann, ist es erfindungsgemäß mit einem Kommunikationsmodul des Master-Dialogsystems gekoppelt. Unter einer Kopplung soll hier verstanden werden, dass die beiden Module in Kommunikationsverbindung stehen, also Informationen insbesondere in Form von elektronischen Nachrichten austauschen können. Das Kommunikationsmodul ist dabei dazu vorgesehen, zur Umsetzung der Anweisung des Nutzers mit wenigstens einem Slave-Dialogsystem zu kommunizieren. Darunter ist zu verstehen, dass das Kommunikationsmodul die Anweisung des Nutzers entweder unverändert oder an das entsprechende Slave-Dialogsystem angepasst an das Slave-Dialogsystem sendet. Ob und ggf. an welches Slave-Dialogsystem eine Anweisung gesendet wird, entscheidet insbesondere das Interpretationsmodul. Das Kommunikationsmodul empfängt die Rückmeldung des Slave-Dialogsystems und gibt sie an das Interpretationsmodul weiter, welches daraus die Rückmeldung des Master-Dialogsystems an den Nutzer generiert. Die Rückmeldung des Master-Dialogsystems an den Nutzer kann dabei beispielsweise direkt aus der Rückmeldung des Slave-Dialogsystems an das Kommunikationsmodul bestehen. Es ist allerdings auch möglich, dass das Interpretationsmodul die Rückmeldung des Slave-Dialogsystems an das Kommunikationsmodul interpretiert oder auswertet und auf Grund der Interpretation oder Auswertung die Rückmeldung des Master-Dialogsystems an den Nutzer generiert.

Das Interpretationsmodul des Master-Dialogsystems kommuniziert mit dem Slave-Dialogsystem insbesondere so, dass es das Verhalten eines menschlichen Nutzers imitiert, also beispielsweise manchmal Anweisungen mit Schreibfehlern an das Slave-Dialogsystem sendet. Das kann insbesondere dazu dienen, dass das Slave-Dialogsystem nicht erkennt, dass es mit einem anderen Dialogsystem kommuniziert.

Das Slave-Dialogsystem verfügt ebenfalls über
- ein Eingangsmodul, über welches ein Nutzer Anweisungen in natürlicher Sprache eingeben kann,
- ein Interpretationsmodul, welches die Anweisungen des Nutzers interpretiert und Rückmeldungen zu den Anweisungen generiert und
- ein Ausgangsmodul, über welches die genannten Rückmeldungen an den Nutzer ausgegeben werden können.

Das Slave-Dialogsystem kann aber auch von einem Menschen, beispielsweise einem Experten für ein bestimmtes Thema, bedient oder betrieben werden. Die Kommunikation mit bzw. die Anfrage an derartiges Dialogsystem kann insbesondere dann ausgeführt werden, wenn kein anderes Slave-Dialogsystem in Form von Chatbots eine sinnvolle Rückmeldung auf die Anweisung des Nutzers liefern konnte.

Nachdem das Interpretationsmodul des Master-Dialogsystems die Rückmeldung generiert hat, gibt es diese an das Ausgangsmodul des Master-Dialogsystems weiter. Das Ausgangsmodul gibt die Rückmeldung dann an den Nutzer aus. Für die Ausgabe wird insbesondere die gleiche Kommunikationsart wie für die Eingabe der Anweisung genutzt. Es kann aber auch eine andere Kommunikationsart für die Rückmeldung verwendet werden, beispielsweise kann der Nutzer eine Anweisung mündlich eingeben und die Rückmeldung wird in Textform ausgeben. Der Nutzer kann die Kommunikationsart der Rückmeldung beispielsweise vorgeben oder das Master-Dialogsystem wählt beispielsweise in Abhängigkeit von der Tageszeit, dem Aufenthaltsort des Nutzers oder der Vertraulichkeit der Nachricht automatisch eine Kommunikationsart. Die Rückmeldung wird also insbesondere über das Internet an ein Endgerät des Nutzers übertragen, an dem sie dann angezeigt oder abgespielt wird.

Es ist auch möglich, dass das Eingangsmodul und das Ausgangsmodul in einem Modul kombiniert sind.

Das Eingangsmodul und das Ausgangsmodul des Master-Dialogsystems sind dazu eingerichtet, mit einem Endgerät des Nutzers mittels eines ersten Programms zu kommunizieren, mittels welchem der Nutzer auch mit anderen Nutzern kommunizieren kann. Das Eingangsmodul und das Ausgangsmodul sind insbesondere dazu eingerichtet, mit einem Endgerät des Nutzers mittels eines Satzes von unterschiedlichen Programmen zu kommunizieren, mittels welchen der Nutzer auch mit anderen Nutzern kommunizieren kann. Damit ist die Nutzung des Master-Dialogsystems für den Nutzer besonders einfach, da er kein spezielles Programm des Master-Dialogsystems nutzen muss, sondern bekannte und gewohnte Programme nutzen kann. Wenn der Nutzer aus einem Satz, also mehreren Programmen auswählen kann, so ist er nicht auf ein bestimmtes Programm beschränkt, sondern kann sich ein Programm des Satzes auswählen, das er benutzen möchte. Es ist auch möglich, dass der Nutzer ein erstes Programm zum Senden der Anweisung an das Master-Dialogsystem verwendet und die Rückmeldung des Master-Dialogsystems über ein anderes Programm erfolgt.

Das Programm oder die App ist insbesondere ein Programm zum Versenden und Empfangen von Kurznachrichten, wie beispielsweise SMS, WhatsApp^{®}, Facebook Messenger^{®}, Twitter^{®}, WeChat^{®}, aber auch E-Mail-Programme oder ganz allgemein Programme zum Senden und Empfangen von elektronischen Nachrichten sind möglich.

Der Nutzer gibt damit über das genannte Programm an einem Endgerät, beispielsweise einem PC, einem Tablet-Computer oder einem Smartphone die Anweisung ein und erhält die Rückmeldung vom Slave-Dialogsystem ebenfalls über das Programm auf dem Endgerät.

Erfindungsgemäß ist das Master-Dialogsystem dazu eingerichtet, über unterschiedliche Adressen mit Endgeräten von Nutzern zu kommunizieren, wobei eine Funktionalität des Interpretationsmoduls von der verwendeten Adresse abhängig ist. Damit kann die Funktionalität oder der Funktions- bzw. Leistungsumfang des Master-Dialogsystems sehr einfach eingestellt werden. Es ist also sehr einfach möglich, dass ein einziges Master-Dialogsystem je nach Adresse, die von einem Nutzer für die Eingabe von Anweisungen verwendet wurde, ein anderes Verhalten aufweist.

Unter einer Adresse soll in diesem Zusammenhang eine eindeutige Kennung verstanden werden, unter der das Master-Dialogsystem bei Nutzung eines Kommunikationskanals, insbesondere eines Programms, mittels welchem der Nutzer auch mit anderen Nutzern kommunizieren kann, erreicht werden kann. Beispielsweise ist bei Nutzung von SMS oder WhatsApp^{®} die Adresse eine Mobilfunknummer und bei Nutzung von E-Mail eine Mail-Adresse. Eine Adresse kann aber auch eine Internetseite sein, über die der Nutzer Anweisungen eingeben kann, eine vom Nutzer generierte so genannte "Digital Indentity", eine Account-ID, beispielsweise bei Twitter^{®}, Facebook oder WeChat^{®}.

Unter der Funktionalität des Interpretationsmoduls soll in diesem Zusammenhang beispielsweise verstanden werden, welche Art von Anweisungen bearbeitet werden können oder mit welchen Slave-Dialogsystemen zur Generierung der Rückmeldung an den Nutzer kommuniziert wird. Je nach Funktionalität können eventuell erhobene Nutzungskosten des Master-Dialogsystems variieren.

Das Master-Dialogsystem kann beispielsweise eine erste und eine zweite Mobilfunknummer bereitstellen, über die Nutzer Anweisungen eingeben können. Das Master-Dialogsystem kann dann beispielsweise so ausgeführt sein, dass es bei Anweisungen über die erste Mobilfunknummer nur Rückmeldungen zu Flugverbindungen und bei Anweisungen über die zweite Mobilfunknummer Rückmeldungen über Flug- und Bahnverbindungen gibt und außerdem Hotelbuchungen erlaubt.

In Ausgestaltung der Erfindung hat das Interpretationsmodul Zugriff auf Anmeldeinformationen des Nutzers bei dem wenigstens einen anderen Dialogsystem. Damit ist die Nutzung des Master-Dialogsystems für den Nutzer besonders komfortabel, da er die Anmeldeinformationen bei einer Kommunikation des Kommunikationsmoduls mit dem Slave-Dialogsystem nicht eingeben muss.

Manche Dialogsysteme bieten die Möglichkeit oder verlangen es, dass ein Nutzer sich für die Nutzung des entsprechenden Dialogsystems mit seinen Anmeldeinformationen, insbesondere einer User-ID und einem Passwort anmeldet. Die Anmeldung ermöglicht es zum einen, unerlaubten Zugriff auf das Dialogsystem zu verhindern und zum anderen, die Identität des Nutzers zu kennen und beispielsweise auf gespeicherte Einstellungen oder Rechte des Nutzers zugreifen zu können.

Statt die Anmeldeinformationen des Nutzers zu verwenden, kann das Master-Dialogsystem auch über eigene Anmeldeinformationen verfügen, beispielsweise einen eigene Mobilfunknummer für SMS oder WhatsApp^{®} oder einen eigenen Facebook ^{®} Account. Das Master-Dialogsystem kann damit quasi eine künstliche Identität haben. Für die Nutzung des Master-Dialogsystems kann ebenfalls eine Anmeldung mit Anmeldeinformationen beispielsweise in Form von User-ID und Passwort notwendig sein.

Die Eingabe des Passworts kann beispielsweise dadurch ersetzt werden, dass der Nutzer einen vorgegebenen Satz vervollständigen muss.

Die Anmeldeinformationen des Nutzers oder des Master-Dialogsystems für die Slave-Dialogsysteme sind insbesondere im Interpretationsmodul oder im Kommunikationsmodul gespeichert. Sie sind insbesondere in einem besonders geschützten Bereich und/oder verschlüsselt gespeichert. Es ist ebenfalls möglich, dass die Anmeldeinformationen an einem anderen Ort, beispielsweise auch außerhalb des Master-Dialogsystems gesichert gespeichert. Das Interpretationsmodul und/oder das Kommunikationsmodul können in diesem Fall darauf, insbesondere geschützt zugreifen. Die Anmeldeinformationen des Master-Dialogsystems können zusätzlich auch auf dem Endgerät des Nutzers, beispielsweise im Adressbuch eines Smartphones gespeichert werden.

Es ist möglich, dass unterschiedliche Nutzer des Master-Dialogsystem unterschiedliche Rechte haben. Diese sind insbesondere mit seiner User-ID verknüpft.

In Ausgestaltung der Erfindung ist das Dialogsystem dazu eingerichtet, den Nutzer automatisch zu erkennen. Damit ist die Nutzung des Master-Dialogsystems für den Nutzer besonders komfortabel, da er zumindest einen Teil seiner Anmeldeinformationen nicht an das Master-Dialogsystem senden muss. Es ist dabei möglich, dass er gar keine Anmeldeinformation, also insbesondere kein Passwort eingeben muss oder dass er keine User-ID eingeben muss, die Eingabe des Passworts aber verlangt wird. Die Erkennung des Nutzers kann beispielsweise anhand seiner Stimme, einer IP-Adresse seines Endgeräts oder einer Absenderadresse, von der er seine Anweisung an das Master-Dialogsystem gesandt hat, erfolgen. Darüber hinaus sind weitere Möglichkeiten der Erkennung des Nutzers denkbar.

In Ausgestaltung der Erfindung ist das Kommunikationsmodul dazu eingerichtet, mit dem wenigstens einen weiteren Dialogsystem mittels eines zweiten Programms zu kommunizieren, mittels welchem der Nutzer auch mit anderen Nutzern kommunizieren kann. Das genannte zweite Programm ist dabei nicht mit dem genannten ersten Programm identisch oder nicht in dem genannten Satz von Programmen enthalten. Der Nutzer ist damit vorteilhafterweise bei der Wahl des Programms nicht darauf beschränkt, welche Programme das Slave-Dialogsystem anbietet, sondern kann frei aus den vom Master-Dialogsystem angebotenen Programmen auswählen.

Beispielsweise kann ein Slave-Dialogsystem so ausgeführt sein, dass es nur Anweisungen per SMS akzeptiert und Rückmeldungen auch nur über SMS ausgibt. Das Kommunikationsmodul des Master-Dialogsystems kommuniziert damit per SMS mit dem Slave-Dialogsystem. Der Nutzer kann allerdings mit dem Master-Dialogsystem per WhatsApp^{®} kommunizieren, wenn er dies möchte. Er ist damit nicht an die Vorgaben des Slave-Dialogsystems gebunden.

In Ausgestaltung der Erfindung ist das Dialogsystem lernfähig. Es kann sich damit laufend optimieren und insbesondere an die verschiedenen Nutzer anpassen.

Das Dialogsystem kann zum einen besondere Ausdrucksweisen eines Nutzers lernen und damit schneller und treffsicherer die Anweisungen des Nutzers erkennen bzw. interpretieren. Zum anderen kann es Vorlieben des Nutzers, beispielsweise hinsichtlich der Auswahl von Hotels lernen. Damit kann es dem Nutzer die Anweisungen des Nutzers besonders gut umsetzen.

Das genannte Lernen wird beispielsweise durch eine Änderung oder Anpassung der oben genannten, im Interpretationsmodul abgelegten Erkennungsmustern für die Interpretation der vom Nutzer eingegebenen Anweisungen umgesetzt.

Um ein Lernen zu ermöglichen, kann das Interpretationsmodul in einem Fall, in dem es eine vom Nutzer eingegebene Anweisung nicht versteht, den Nutzer bitten, die Anweisung mit etwas anderen Worten erneut einzugeben. So kann ein Zusammenhang zwischen der ersten (nicht verstandenen) Anweisung und der erneut eingegebenen zweiten Anweisung hergestellt werden, so dass bei einer späteren erneuten Eingabe der ersten Anweisung diese verstanden werden kann. Dabei nimmt das Interpretationsmodul insbesondere nicht automatisch an, dass ein Zusammenhang zwischen der ersten und der zweiten Anweisung besteht, sondern prüft dies beispielsweise automatisch ab, indem es prüft ob die Ähnlichkeit der beiden Anweisungen Sinn machen kann. Es ist auch möglich, dass die beiden Anweisungen gespeichert und von einem menschlichen Supervisor verglichen und geprüft werden oder dass das Interpretationsmodul bei einer späteren Eingabe der ersten, zuerst nicht verstandenen Anweisung nachfragt, ob die zweite Anweisung ausgeführt werden soll.

Die oben genannte Aufgabe wird auch von einem Verfahren zur Umsetzung von Anweisungen eines Nutzers gelöst, bei welchem der Nutzer Anweisungen in natürlicher Sprache über ein Eingangsmodul an ein Dialogsystem eingeben kann, ein Interpretationsmodul des Dialogsystems die Anweisungen des Nutzers interpretiert und Rückmeldungen zu den Anweisungen generiert und ein Ausgangsmodul des Dialogsystems, die genannten Rückmeldungen an den Nutzer ausgibt. Erfindungsgemäss kommuniziert ein mit dem Interpretationsmodul gekoppeltes Kommunikationsmodul zur Umsetzung von Anweisungen des Nutzers mit wenigstens einem anderen Dialogsystem. Das andere, hier Slave-Dialogsystem genannte Dialogsystem verfügt ebenfalls über
- ein Eingangsmodul, über welches ein Nutzer Anweisungen in natürlicher Sprache eingeben kann,
- ein Interpretationsmodul, welches die Anweisungen des Nutzers interpretiert und Rückmeldungen zu den Anweisungen generiert und
- ein Ausgangsmodul, über welches die genannten Rückmeldungen an den Nutzer ausgegeben werden können.

Die oben ausgeführten Merkmale der Ausgestaltungen des erfindungsgemässen Dialogsystems dienen entsprechend auch zur Ausgestaltung des erfindungsgemässen Verfahrens.

Um eine Nutzung eines Master-Dialogsystems zu ermöglichen, kann ein Nutzer insbesondere folgendermaßen vorgehen. Zunächst öffnet der Nutzer eine Internetseite, die beispielsweise vom Betreiber des Master-Dialogsystems zur Verfügung gestellt wird. Er autorisiert sich dort mit einer Nutzerkennung, welche die Nutzung eines oder mehrerer Programme ermöglicht und insbesondere als ein so genannter "Single Sign On Login" ausgeführt ist. Die genannte Nutzerkennung kann beispielsweise ein Facebook^{®} ID sein.

Es ist auch möglich, dass für die Nutzung des Master-Dialogsystems keine Autorisierung des Nutzers mit einer Nutzerkennung erfordert. Insbesondere ist es möglich, dass allgemein zugängliche Daten wie Abfragen aus einer öffentlichen Suchmaschine, Wetterabfragen oder Verkehrsinformationen auch ohne entsprechende Nutzerkennung bzw. vorherige Autorisierung beantwortet werden. Lediglich spezifische Slave-Dialogsysteme, in denen die Identität des Nutzers für eine Zugangskontrolle, z.B. aus Privatsphären- oder Sicherheitsrichtlinien eine Rolle spielt, oder wo eine Verknüpfung verschiedener User-Accounts miteinander gefordert ist, können zu gegebenem Zeitpunkt eine nutzerspezifische Autorisierung erfordern, bevor das Master-Dialogsystem eine Rückmeldung auf entsprechende Anweisungen des Nutzes liefert.

Der Nutzer kann dann über die genannte Internetseite einen Namen für das Master-Dialogsystem festlegen und auch ein Profilbild hochladen. Das Master-Dialogsystem kann als ein persönlicher Assistent mit künstlicher Intelligenz oder mit der englischen Abkürzung "AI" für künstliche Intelligenz als ein persönlicher AI Assistent bezeichnet werden.

Anschließend kann der Nutzer über die Internetseite festlegen, mit welchen Programmen, wie beispielsweise WhatsApp^{®} oder WeChat^{®} er mit dem Master-Dialogsystem kommunizieren will.

Der Nutzer kann außerdem noch festlegen, welche Funktionalität oder welche konkreten Dienste des Master-Dialogsystems er nutzen möchte. Er kann beispielsweise festlegen, dass bei der Buchung von Flügen nur Slave-Dialogsysteme bestimmter Fluggesellschaften angefragt werden sollen.

Nach Abschluss dieser Schritte stellt die genannte Internetseite eine so genannte Visitenkarte insbesondere als vcf-Kontakt zur Verfügung, den der Nutzer in ein Adressbuch seines Endgeräts, beispielsweise eines Smartphones herunterladen kann. Im Adressbuch wird dann das oben genannte Profilbild beim Eintrag des Master-Dialogsystem angezeigt. Damit kann der Nutzer unter Nutzung des Kontakteintrags in seinem Adressbuch sehr einfach Anweisungen an das Master-Dialogsystem senden.

Der Nutzer kann die Einstellungen zu einem späteren Zeitpunkt beispielsweise über die oben genannte Internetseite oder durch das Senden entsprechender Anweisungen an das Master-Dialogsystem 10 ändern. Es ist auch möglich, dass er den vcf-Kontakt herunterlädt, bevor er die gewünschte Funktionalität des Master-Dialogsystems festlegt.

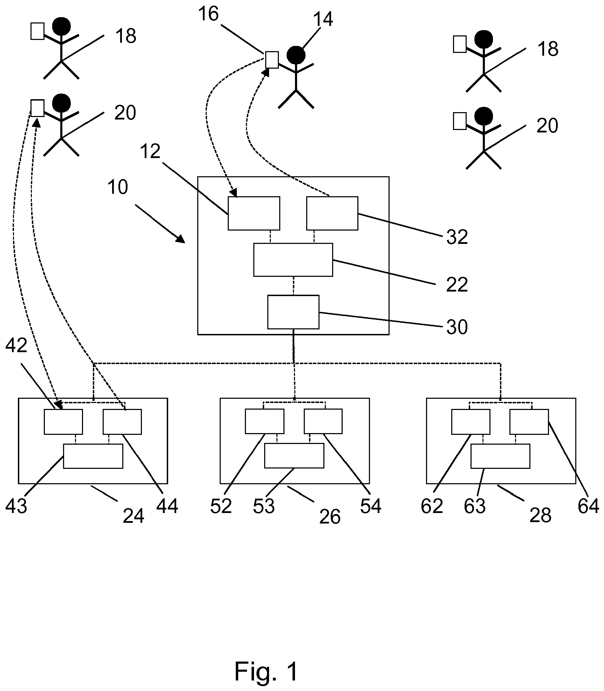

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Dabei zeigt
- Fig. 1: ein Master-Dialogsystem, welches von einem Nutzer Anweisungen empfangen kann und zur Umsetzung der Anweisung mit drei Slave-Dialogsystem kommunizieren kann.

Gemäß Fig. 1 verfügt ein Dialogsystem 10, im Folgenden Master-Dialogsystem genannt, über ein Eingangsmodul 12 über welches ein menschlicher Nutzer 14 Anweisungen in natürlicher Sprache eingeben kann. Der Nutzer 14 benützt dazu ein Endgerät 16, welches beispielsweise als ein Smartphone ausgeführt ist. Er kann die Anweisung entweder schriftlich oder mündlich am Endgerät 16 eingeben und dazu ein Programm oder eine App nutzen, mit dem er auch mit anderen Nutzern 18, 20 kommunizieren kann. Beispielsweise kann der Nutzer 14 ein Programm zum Versenden und Empfangen von Kurznachrichten, wie beispielsweise SMS, WhatsApp^{®}, Facebook Messenger^{®}, Twitter^{®}, WeChat^{®} benutzen. Es ist auch denkbar, dass der Nutzer Anweisungen über einen Browser auf einer Internetseite eingibt.

Statt eines menschlichen Nutzers 14 kann auch ein Dialogsystem, das wie das Master-Dialogsystem 10 ausgeführt ist, Anweisungen an das Eingangsmodul 12 des Master-Dialogsystems 10 senden.

Das Eingangsmodul 12 identifiziert den Nutzer 14 über seine Adresse, von der er die Anweisung an das Eingangsmodul 12 sendet. Wenn der Nutzer 14 die Anweisung beispielsweise über Twitter^{®} sendet, so wird der Nutzer 14 anhand seiner Account-ID bei Twitter^{®} identifiziert.

Das Eingangsmodul 12 führt eine Vorverarbeitung der Anweisung des Nutzers 14 durch, bei welcher eine gesprochene Anweisung in eine schriftliche Anweisung konvertiert wird, die Schreibweise harmonisiert, also beispielsweise Satzzeichen entfernt, Groß- und Kleinschreibung oder Umlaute in ein vorgegebenes Format gebracht werden, oder Tippfehler ausgeglichen werden. Das Ergebnis der Vorverarbeitung wird vom Eingangsmodul 12 an ein Interpretationsmodul 22 des Master-Dialogsystems 10 übermittelt. Das Interpretationsmodul 22 prüft zunächst, ob es eine Rückmeldung auf die Anweisung des Nutzers 14 direkt generieren kann. Das wäre beispielsweise dann der Fall, wenn der Nutzer 14 lediglich nach der aktuellen Uhrzeit fragt.

Kann das Interpretationsmodul 22 die Rückmeldung auf die Anweisung des Nutzers 14 nicht direkt generieren, so legt es fest, welche Slave-Dialogsysteme 24, 26, 28 für die Generierung der Rückmeldung angefragt werden sollen. Bezieht sich die Anweisung des Nutzers 14 beispielsweise auf die Buchung eines Fluges, so kann das Interpretationsmodul 22 eine Anweisung an ein Kommunikationsmodul 30 des Dialogsystems 10 senden, mit den Slave-Dialogsystemen 24 und 26 so kommunizieren und entsprechende Anweisungen an die Slave-Dialogsysteme 24, 26 zu senden. Für die Kommunikation mit den Slave-Dialogsystemen notwendige Anmeldeinformationen in Form von User-IDs und Passwörtern sind im Interpretationsmodul 22 geschützt abgespeichert. Das Master-Dialogsystem 10 simuliert gegenüber den Slave-Dialogsystemen 24, 26 dabei das Verhalten eines menschlichen Nutzers, indem es vereinzelt Schreibfehler in den Anweisungen an die Slave-Dialogsysteme 24, 26 einbaut.

Die Slave-Dialogsysteme 24, 26, 28 weisen analog zum Master-Dialogsystem 10 jeweils ein Eingangsmodul 42, 52, 62, ein Interpretationsmodul 43, 53, 63 und ein Ausgangsmodul 44, 54, 64. Über die Eingangsmodule 42, 52, 62 kann ein Nutzer Anweisungen in natürlicher Sprache eingeben, welche von den Interpretationsmodulen 43, 53, 63 interpretiert werden. Die Ausgangsmodule 44, 54, 64 geben die von den Interpretationsmodulen 43, 53, 63 generierten Rückmeldungen an den Nutzer aus. In der Fig. 1 ist beispielhaft ein Dialog zwischen dem User 20 und dem Slave-Dialog-System 24 dargestellt.

Statt die genannten Anmeldeinformationen des Nutzers 14 zu verwenden, kann das Master-Dialogsystem 10 auch über eigene Anmeldeinformationen verfügen, beispielsweise einen eigene Mobilfunknummer für SMS oder WhatsApp^{®} oder einen eigenen Facebook ^{®} Account, und sich mit diesen Anmeldeinformationen bei den Slave-Dialogsystemen 24, 26 authentifizieren. Die Anmeldeinformationen des Master-Dialogsystems 10 können in einem Adressbuch des Endgeräts 16 des Nutzers 14 gespeichert sein.

Das Kommunikationsmodul 30 empfängt von den Slave-Dialogsystemen 24, 26 die Rückmeldungen auf die an sie gesandten Anweisungen und leitet sie an das Interpretationsmodul 22 weiter. Das Interpretationsmodul 22 wertet die einzelnen Rückmeldungen aus und generiert daraus die Rückmeldung an den Nutzer 14. Bei dem genannten Beispiel einer Frage des Nutzers 14 nach einer Flugbuchung liefert beispielsweise jedes Slave-Dialogsystem 24, 26 den aus seiner Sicht günstigsten Flug. Das Interpretationsmodul 22 wählt daraus den tatsächlich günstigsten Flug aus und generiert eine Rückmeldung an den Nutzer 14 mit dem entsprechenden Inhalt. Das Interpretationsmodul 22 gibt diese Rückmeldung an ein Ausgangsmodul 32 des Master-Dialogsystems 10, welches die Rückmeldung unter Nutzung desselben Programms, mit der der Nutzer 14 die Anweisung eingegeben hat, an den Nutzer 14 zurück. In einem zweiten Schritt kann der Nutzer 14 die Anweisung zur Buchung dieses Flugs an das Master-Dialogsystem 10 senden, welches die Anweisung in einer Kommunikation mit dem zugehörigen Slave-Dialogsystem, beispielsweise Slave-Dialogsystem 24 umsetzt und dem Nutzer 14 die Bestätigung der Buchung auf dem beschriebenen Weg übermittelt.

Es soll im beschriebenen Beispiel davon ausgegangen werden, dass der Nutzer 14 zum Senden der Anweisung an das Master-Dialogsystem 10 ein erstes Programm, beispielsweise WhatsApp^{®} verwendet. Dieses erste Programm ist eines eines Satzes von Programmen, den das Master-Dialogsystem 10 als Möglichkeit der Kommunikation dem Nutzer 14 anbietet. Das Slave-Dialogsystem 24 weist aber keine WhatsApp^{®}-Schnittstelle auf, sondern erlaubt eine Kommunikation ausschließlich über SMS. In diesem Fall kommuniziert das Kommunikationsmodul 30 mit dem Slave-Dialogsystem 24 über SMS, also mittels eines zweiten Programms, das mit dem genannten ersten Programm, nämlich WhatsApp^{®} nicht identisch ist. Das Ausgangsmodul 32 übermittelt die Rückmeldung an den Nutzer 14 unabhängig von der Art der Kommunikation zwischen Kommunikationsmodul 30 und Slave-Dialogsystem 24 per WhatsApp^{®}.

Das Master-Dialogsystem 10 bietet dem Nutzer 14 und allen anderen, nicht dargestellten Nutzern mehrere Adressen, also beispielsweise Mobilfunknummern an, über die das Eingangsmodul 12 Anweisungen entgegennehmen kann. Die Funktionalität des Interpretationsmoduls 22 und damit des gesamten Master-Dialogsystems 10 ist davon abhängig, welche Adresse von einem Nutzer 14 tatsächlich genutzt wird. Beispielsweise werden bei der Nutzung einer ersten Adresse nur die beiden Slave-Dialogsysteme 24, 26 angefragt, die Informationen zu Flugbuchungen liefern und nicht auch das Slave-Dialogsystem 28, das beispielsweise Informationen zu Bahnverbindungen oder Hotelbuchungen liefern kann. Die Anfrage auch an das Slave-Dialogsystem 28 erfolgt nur dann, wenn eine zweite Adresse genutzt wird, deren Nutzung beispielsweise mit höheren Nutzungsgebühren verbunden ist.

Das Master-Dialogsystem 10 ist insbesondere lernfähig. Es kann zum einen besondere Ausdrucksweisen des Nutzers 14 lernen und zum anderen kann es Vorlieben des Nutzers 14, beispielsweise hinsichtlich der Auswahl von Hotels lernen.

Das genannte Lernen wird beispielsweise durch eine Änderung oder Anpassung der oben genannten Vorverarbeitung der Anweisungen des Nutzers 14 umgesetzt.

Um die Nutzung des Master-Dialogsystems 10 zu ermöglichen, geht der Nutzer 24 folgendermaßen vor. Zunächst öffnet er mit seinem Endgerät 25 eine Internetseite, die vom Betreiber des Master-Dialogsystems 10 zur Verfügung gestellt wird. Er autorisiert sich dort beispielsweise mit seiner Facebook^{®} ID.

Der Nutzer 24 legt dann über die genannte Internetseite einen Namen für das Master-Dialogsystem 10 fest und lädt ein Profilbild für das Master-Dialogsystem 10 hoch.

Anschließend kann der Nutzer 24 über die Internetseite festlegen, mit welchen Programmen, wie beispielsweise WhatsApp^{®} oder WeChat^{®} er mit dem Master-Dialogsystem 10 kommunizieren will.

Der Nutzer 24 legt außerdem noch fest, welche Funktionalität oder welche konkreten Dienste des Master-Dialogsystems er nutzen möchte. Er legt beispielsweise fest, mit welchen Slave-Dialogsystemen 11, 12, 13 das Master-Dialogsystem 10 kommunizieren soll.

Nach Abschluss dieser Schritte stellt die genannte Internetseite einen als vcf-Kontakt zur Verfügung, den der Nutzer 25 in ein Adressbuch seines Endgeräts 25 herunterlädt. Über diesen Kontakt im Adressbuch seines Endgeräts 25 kann der Nutzer 24 sehr einfach Anweisungen an das Master-Dialogsystem 10 senden.

Der Nutzer kann die Einstellungen zu einem späteren Zeitpunkt, beispielsweise über die oben genannte Internetseite, ändern. Es ist auch möglich, dass er den vcf-Kontakt herunterlädt, bevor er die gewünschte Funktionalität des Master-Dialogsystems festlegt.

Der Nutzer 24 kann die genannten Einstellungen zu einem späteren Zeitpunkt über die oben genannte Internetseite oder durch das Senden entsprechender Anweisungen an das Master-Dialogsystem 10 ändern

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen. Alle daraus resultierenden Gegenstände entsprechen aber nur der Erfindung, wenn sie immer noch unter den Definitionsbereich der nachfolgenden Ansprüche fallen.

## Patentansprüche

1. Kombination aus einem Master-Dialogsystem und wenigstens einem Slave-Dialogsystem zur Umsetzung von Anweisungen eines Nutzers (14),
wobei das Master-Dialogsystem (10) aufweist:
- ein Eingangsmodul (12), über welches der Nutzer (14) Anweisungen in natürlicher Sprache eingeben kann,
- ein Interpretationsmodul (22), welches die Anweisungen des Nutzers (14) interpretiert und Rückmeldungen zu den Anweisungen generiert,
- ein Ausgangsmodul (32), über welches die genannten Rückmeldungen an den Nutzer (14) ausgegeben werden können, und
- ein mit dem Interpretationsmodul (22) gekoppeltes Kommunikationsmodul (30), welches zur Umsetzung der Anweisungen des Nutzers (14) mit wenigstens einem Slave-Dialogsystem (24, 26, 28) kommuniziert,
wobei das wenigstens eine Slave-Dialogsystem (24, 26, 28) aufweist:
- ein Eingangsmodul (42, 52, 62), über welches ein Nutzer (20) Anweisungen in natürlicher Sprache eingeben kann,
- ein Interpretationsmodul (43, 53, 63), welches die Anweisungen des Nutzers (20) interpretiert und Rückmeldungen zu den Anweisungen generiert und
- ein Ausgangsmodul (44, 54, 64), über welches die genannten Rückmeldungen an den Nutzer (20) ausgegeben werden können,
wobei das Eingangsmodul (12) und das Ausgangsmodul (32) des Master-Dialogsystems (10) dazu eingerichtet sind, mit einem Endgerät (16) des Nutzers (14) mittels eines ersten Programms zu kommunizieren, mittels welchem der Nutzer (14) auch mit anderen Nutzern (18, 20) kommunizieren kann,
**dadurch gekennzeichnet, dass**
das Master-Dialogsystem (10) dazu eingerichtet ist, über unterschiedliche Adressen des Master-Dialogsystems
mit Endgeräten (16) von Nutzern (14) zu kommunizieren, wobei eine Funktionalität des Interpretationsmoduls (22) des Master-Dialogsystems (10) von der verwendeten Adresse abhängig ist.

2. Kombination nach Anspruch 1,
**dadurch gekennzeichnet, dass**
das Interpretationsmodul (22) des Master-Dialogsystems (10) Zugriff auf Anmeldeinformationen des Nutzers (14) bei dem wenigstens einen Slave-Dialogsystem (24, 26, 28) hat.

3. Kombination nach Anspruch 1 oder 2,
**dadurch gekennzeichnet, dass**
das Master-Dialogsystem (10) dazu eingerichtet ist, den Nutzer (14) automatisch zu erkennen.

4. Kombination nach Anspruch 1, 2 oder 3,
**dadurch gekennzeichnet, dass**
das Eingangsmodul (12) und das Ausgangsmodul (32) des Master-Dialogsystems (10) dazu eingerichtet sind, mit dem Endgerät (16) des Nutzers mittels eines Satzes von unterschiedlichen Programmen zu kommunizieren, mittels welchen der Nutzer (14) auch mit anderen Nutzern (18, 20) kommunizieren kann.

5. Kombination nach einem der Ansprüche 1 bis 4,
**dadurch gekennzeichnet, dass**
das Kommunikationsmodul (30) des Master-Dialogsystems (10) dazu eingerichtet ist, mit dem wenigstens einen Slave-Dialogsystem (24, 26, 28) mittels eines zweiten Programms zu kommunizieren, mittels welchem der Nutzer (14) auch mit anderen Nutzern (18, 20) kommunizieren kann, und
das genannte zweite Programm nicht mit dem genannten ersten Programm identisch ist oder nicht in dem genannten Satz von Programmen enthalten ist.

6. Kombination nach einem der Ansprüche 1 bis 5,
**dadurch gekennzeichnet, dass**
das Master-Dialogsystem (10) lernfähig ist.

7. Verfahren zur Umsetzung von Anweisungen eines Nutzers (14) , bei welchem
- der Nutzer (14) Anweisungen in natürlicher Sprache über ein Eingangsmodul (12) an ein Master-Dialogsystem (10) eingeben kann,
- ein Interpretationsmodul (22) des Master-Dialogsystems (10) die Anweisungen des Nutzers (14) interpretiert und Rückmeldungen zu den Anweisungen generiert und
- ein Ausgangsmodul (32) des Master-Dialogsystems (10), die genannten Rückmeldungen an den Nutzer (14) ausgibt,
wobei
ein mit dem Interpretationsmodul (22) gekoppeltes Kommunikationsmodul (30) des Master-Dialogsystems (10) zur Umsetzung von Anweisungen des Nutzers (14) mit wenigstens einem Slave-Dialogsystem (24, 26, 28) kommuniziert, wobei das wenigstens eine Slave-Dialogsystem (24, 26, 28) aufweist:
- ein Eingangsmodul (42, 52, 62), über welches ein Nutzer (20) Anweisungen in natürlicher Sprache eingeben kann,
- ein Interpretationsmodul (43, 53, 63), welches die Anweisungen des Nutzers (20) interpretiert und Rückmeldungen zu den Anweisungen generiert und
- ein Ausgangsmodul (44, 54, 64), über welches die genannten Rückmeldungen an den Nutzer (20) ausgegeben werden können,
wobei das Eingangsmodul (12) und das Ausgangsmodul (32) des Master-Dialogsystems (10) dazu eingerichtet sind, mit einem Endgerät (16) des Nutzers (14) mittels eines ersten Programms zu kommunizieren, mittels welchem der Nutzer (14) auch mit anderen Nutzern (18, 20) kommunizieren kann,
**dadurch gekennzeichnet, dass**
das Master-Dialogsystem (10) dazu eingerichtet ist, über unterschiedliche Adressen des Master-Dialogsystems
mit Endgeräten (16) von Nutzern (14) zu kommunizieren, wobei eine Funktionalität des Interpretationsmoduls (22) des Master-Dialogsystems (10) von der verwendeten Adresse abhängig ist.

## Claims

1. Combination of a Master-Dialog System and at least one Slave-Dialog System for implementing instructions of a user (14), with the Master-Dialog System (10) being equipped with
- an input module (12), into which the user (14) can enter instructions in natural language,
- an interpretation module (22), which interprets the instructions of the user (14) and generates feedbacks in response to these instructions,
- an output module (32), from which these feedbacks can be issued to the user (14), and
- a communications module (30), which is coupled with the interpretation module (22) and which communicates with at least one Slave-Dialog System (24, 26, 28), in order to implement user instructions,
with this at least one Slave-Dialog System (24, 26, 28) being equipped with
- an input module (42, 52, 62), into which a user (20) can enter instructions in natural language,
- an interpretation module (43, 53, 63), which interprets the instructions of the user (20) and which generates the feedbacks in response to the instructions and
- an output module (44, 54, 64), from which these feedbacks can be issued to the user (20),
with the input module (12) and the output module (32) of the Master-Dialog Systems (10) being designed in such a way to enable the communication with a terminal device (16) of the user (14) by means of a first program, with which the user (14) can also communicate with other users (18, 20),
this being **characterized in that**
the Master-Dialog System (10) has been designed to be able to communicate via different addresses with user terminal devices (16), with a functionality of the Master-Dialog System's (10) interpretation module (22) being dependent on the address used.

2. Combination according to claim 1,
this being **characterized in that**
the Master-Dialog System's (10) interpretation module (22) has access to logon credentials of the user (14) for at least one Slave-Dialog System (24, 26, 28).

3. Combination according to claim 1 or 2,
this being **characterized in that**
the Master-Dialog System (10) has been designed to automatically recognize the user (14).

4. Combination according to claim 1, 2 or 3,
this being **characterized in that**
the Master-Dialog System's (10) input module (12) and output module (32) are designed in such a way to enable the communication with the terminal device (16) of the user by means of a set of different programs, with the help of which the user (14) can also communicate with other users (18, 20).

5. Combination according to one of claims 1 - 4,
this being **characterized in that**
the communications module (30) of the Master-Dialog System (10) has been designed in such a way to enable the communication with the at least one Slave-Dialog System (24, 26, 28) by means of a second program, with the help of which the user (14) can also communicate with other users (18, 20), and
this second program not being identical with the first program referred to above or not contained in the set of programs mentioned above.

6. Combination according to one of the claims 1 - 5,
this being **characterized in that**
the Master-Dialog System (10) is capable of learning.

7. Process for implementing instructions of a user (14), in the course of which
- the user (14) can enter instructions in natural language into an input module (12) which are to be transmitted to a Master-Dialog System (10),
- an interpretation module (22) of the Master-Dialog System (10) interprets the instructions of the user (14) and generates feedbacks in response to these instructions and
- an output module (32) of the Master-Dialog System (10) issues these feedbacks to the user (14),
with a communications module (30) of the Master-Dialog Systems (10) that is coupled with the interpretation module (22) communicating with at least one Slave-Dialog System (24, 26, 28), in order to implement user instructions, with the at least one Slave-Dialog System (24, 26, 28) being equipped with
- an input module (42, 52, 62), into which a user (20) can enter instructions in natural language,
- an interpretation module (43, 53, 63), which interprets the instructions of the user (20) and generates feedbacks in response to these instructions and
- an output module (44, 54, 64), from which these feedbacks can be issued to the user (20),
with the Master-Dialog System's (10) input module (12) and output module (32) being designed in such a way to be able to communicate with a terminal device (16) of the user (14) by means of a first program, with the help of which the user (14) can also communicate with other users (18, 20),
this being **characterized in that**
the Master-Dialog System (10) has been designed in such a way to enable the communication via different addresses with terminal devices (16) of users (14), with a functionality of the Master-Dialog System's (10) interpretation module (22) being dependent on the address actually used.

## Revendications

1. Combinaison d'un système de dialogue maître et d'au moins un système de dialogue esclave pour la mise en oeuvre des instructions d'un utilisateur (14), le système de dialogue maître (10) comportant :
- un module d'entrée (12), par lequel l'utilisateur (14) peut saisir des instructions en langage courant,
- un module d'interprétation (22), qui interprète les instructions de l'utilisateur (14) et génère des réponses aux instructions,
- un module de sortie (32), par lequel les réponses, mentionnées, à l'utilisateur (14) peuvent être émises, et
- - un module de communication (30) couplé avec le module d'interprétation (22), qui communique avec au moins un système de dialogue esclave (24, 26, 28) pour mettre en oeuvre les instructions de l'utilisateur (14),
le système de dialogue esclave (24, 26, 28) au moins comportant :
- un module d'entrée (42, 52, 62), par lequel l'utilisateur (20) peut saisir des instructions en langage courant,
- un module d'interprétation (43, 53, 63), qui interprète les instructions de l'utilisateur (20) et génère des réponses aux instructions et
- un module de sortie (44, 54, 64), par lequel les réponses, mentionnées, à l'utilisateur (20) peuvent être émises,
le module d'entrée (12) et le module de sortie (32) du système de dialogue maître (10) étant configurés pour communiquer avec un terminal (16) de l'utilisateur (14) au moyen d'un premier programme, grâce auquel l'utilisateur (14) peut également communiquer avec d'autres utilisateurs (18, 20), **caractérisé par le fait que** le système de dialogue maître (10) est configuré pour communiquer par différentes adresses du système de dialogue maître avec les terminaux (16) des utilisateurs (14), une fonctionnalité du module d'interprétation (22) du système de dialogue maître (10) étant dépendante de l'adresse utilisée.

2. Combinaison selon la revendication 1, **caractérisée par le fait que** le module d'interprétation (22) du système de dialogue maître (10) a accès aux informations d'enregistrement de l'utilisateur (14) pour au moins un système de dialogue- esclave (24, 26, 28).

3. Combinaison selon la revendication 1 ou 2,
**caractérisée par le fait que**
le système de dialogue maître (10) est configuré pour reconnaître automatiquement l'utilisateur (14).

4. Combinaison selon la revendication 1, 2 ou 3,
**caractérisée par le fait que**
le module d'entrée (12) et le module de sortie (32) du système de dialogue maître (10) sont configurés pour communiquer avec le terminal (16) de l'utilisateur au moyen d'une séquence des différents programmes, grâce à laquelle l'utilisateur (14) peut également communiquer avec d'autres utilisateurs (18, 20).

5. Combinaison avec une des revendications 1 à 4,
**caractérisée par le fait que**
le module de communication (30) du système de dialogue maître (10) est configuré pour communiquer avec au moins un système de dialogue esclave (24, 26, 28) au moyen d'un deuxième programme, grâce auquel l'utilisateur (14) peut également communiquer avec d'autres utilisateurs (18, 20), et
le deuxième programme mentionné n'est pas identique au premier programme mentionné ou n'est pas contenu dans la séquence mentionnée des programmes.

6. Combinaison avec une des revendications 1 à 5,
**caractérisée par le fait que**
le système de dialogue maître (10) est adaptatif.

7. Procédé pour mettre en oeuvre les instructions d'un utilisateur (14), pour lequel
- l'utilisateur (14) peut saisir les instructions en langage courant via un module d'entrée (12) dans un système de dialogue maître (10),
- un module d'interprétation (22) du système de dialogue maître (10) interprète les instructions de l'utilisateur (14) et génère des réponses aux instructions et
- un module de sortie (32) du système de dialogue maître (10), qui émet les réponses mentionnées à l'utilisateur (14),
un module de communication (30), couplé avec le module d'interprétation (22), du système de dialogue maître (10) communiquant avec au moins un système de dialogue esclave (24, 26, 28) pour mettre en oeuvre les instructions de l'utilisateur (14), celui-ci comportant au moins un système de dialogue esclave (24, 26, 28) :
- un module d'entrée (42, 52, 62), par lequel un utilisateur (20) peut saisir des instructions en langage courant,
- un module d'interprétation (43, 53, 63), qui interprète les instructions de l'utilisateur (20) et génère des réponses aux instructions et
- un module de sortie (44, 54, 64), par lequel les réponses, mentionnées, à l'utilisateur (20) peuvent être émises,
le module d'entrée (12) et le module de sortie (32) du système de dialogue maître (10) étant configurés pour communiquer avec un terminal (16) de l'utilisateur (14) au moyen d'un premier programme, grâce auquel l'utilisateur (14) peut également communiquer avec d'autres utilisateurs (18, 20), **caractérisé par le fait que**
le système de dialogue maître (10) est configuré pour communiquer par différentes adresses du système de dialogue maître avec les terminaux (16) des utilisateurs (14), une fonctionnalité étant dépendante du module d'interprétation (22) du système de dialogue maître (10) de l'adresse utilisée.
